# EUROPEAN PATENT SPECIFICATION

(11) **EP 2 300 538 B1**
(45) Date of publication and mention of the grant of the patent: **20.02.2013**
(21) Application number: 09768955.8
(22) Date of filing: 22.06.2009
(51) Int. Cl.: C08L 67/06, C08F 283/01, C08G 63/78, C08J 3/00, C08L 51/08, C09D 167/06, C09D 151/08

(54) **PROCESS TO DISPERSE ORGANIC MICROPARTICLES / NANOPARTICLES INTO NON-AQUEOUS RESIN MEDIUM**
VERFAHREN ZUM DISPERGIEREN VON ORGANISCHEN MIKROPARTIKELN/NANOPARTIKELN IN NICHTWÄSSRIGEM HARZMEDIUM
PROCÉDÉ POUR DISPERSER DES MICROPARTICULES/NANOPARTICULES ORGANIQUES DANS UN MILIEU DE RÉSINE NON AQUEUX

(30) Priority: 26.06.2008 US 76082 P
(43) Date of publication of application: 30.03.2011
(73) Proprietor: CCP Composites US, North Kansas City, MO 64114 (US)
(72) Inventor: HSU, Chih-Pin, Kansas City MO 64152 (US); ZHAO, Ming-Yang, Kansas City MO 64151 (US); VOEKS, Steven, L., Smithville MO 64089 (US)
(74) Representative: Leyder, Francis
(86) International application number: PCT/EP2009/004479
(87) International publication number: WO 2009/156106

(56) References cited:
- WO-A2-2008/006580
- US-A- 4 025 474
- US-B1- 6 878 776

## Description

The preparation of organic microparticles / nanoparticles has been well known in the coating industry for providing unique properties for coating applications. These organic microparticles / nanoparticles are prepared by either emulsion polymerization in aqueous medium or by dispersion polymerization in non-aqueous medium. The techniques of preparing these organic microparticles / nanoparticles are well documented. The essential techniques are incorporated into the process to provide stability of microparticles /nanoparticles during the polymerization process and functionality on microparticles /nanoparticles for the use later in applications.

German Patent DE 2746481 described a procedure to produce reactive micro-gels from unsaturated polyesters and reactive monomer. The unsaturated polyester was emulsified in water with/without an optional surfactant under constant mixing. The reactive micro-gels have a diameter from 10 to 300 nanometers and have reactive hydroxyl or carboxyl groups on their surface. The weight ratio of the unsaturated polyester to monomer was from 1:10 to 10:1 in the making of reactive micro-gels.

US Patent 5,176,959 described crosslinked polymer microparticles produced by emulsion polymerizing a monomer mixture containing a crosslinking monomer having a plurality of polymerizable sites in the molecule in an aqueous medium containing a polymeric amide-acid and a neutralizing base as an emulsifier/dispersant. The polymer microparticles were incorporated in thermosetting coating compositions for rheology control and other purposes.

US Patent 5,565,504 described an aqueous dispersion of a reactive micro-gel comprising a polymer of at least one allyl ether-containing polyester or polyester urethane. The micro-gels had an average diameter of 10 to 1000 nanometers. The micro-gels were insoluble but swell in the usual organic solvents. The dispersion will dry without additional film-forming agent to form a uniform, transparent and reactive film.

A coating composition containing crosslinked microparticles was also described in US Patent 2005/0228124. The crosslinked microparticles were formed from (i) a C₈ to C₂₀ alkyl ester of (meth)acrylic acid ; (ii) a polymerizable ethylenically unsaturated monomer having a polar functional group ; and (iii) optionally, a polymerizable ethylenically unsaturated monomer, wherein (i), (ii) and (iii) are different from each other; and the polymer had a glass transition temperature of no more than -10°C.

US Patent 7,091,275 described an aqueous polymeric composition containing select polymeric nanoparticles. The polymeric nanoparticles contain, as polymerized units, at least one multiethylenically unsaturated monomer and at least one water soluble monomer. The polymeric nanoparticles had a mean diameter in the range of from 1 to 50 nanometers. The aqueous polymeric composition is useful for preparing coatings having at least one improved property compared to a coating absent the select polymeric nanoparticles.

US Patent 6,586,097 described crosslinked microparticles between 10-300 nanometers in size. The crosslinked microparticles were obtained by dispersion polymerization in non-aqueous medium which is a non-solvent for the polymer formed. The reaction composition comprised : at least one monomer A, comprising only one ethylenic unsaturation, giving the microparticles self-stabilization during and after polymerization, without any addition of stabilizing agent ; at least one compound B comprising at least two ethylenic unsaturations ; and optionally, at least one compound C comprising only one ethylenic unsaturation and/or at least one compound D which is different from A, B and C and comprising at least one ethylenic unsaturation which can undergo radical-mediated polymerization and at least one second reactive function f1 which is other than an ethylenic unsaturation.

US Patent 6,878,776 described thermosetting compositions, comprising crosslinked polymer microparticles with a size ranging from 10 to 300 nm and carrying at least one reactive functional group which can react with at least one of the reactive components of the thermosetting composition. These microparticles may also carry at least one second reactive functional group which can react with other functional group of the same type carried by another microparticle and/or by a reactive component of the thermosetting composition. These microparticles are at least partially soluble, miscible and/or dispersible in the starting thermosetting composition.

WO 2008/006580 described a process for preparing organic nanoparticles with the steps of (a) preparing a solution comprising an unsaturated polyester and/or a vinyl ester resin, an initiator and a hydrophobic monomer ; (b) emulsifying the solution obtained in step (a) in an aqueous phase ; and thereafter (c) curing the emulsified solution. European Patent EP 1,484,355 described a process for preparing polymeric nanoparticles with mean particle diameter of 1 to 200 nanometers. The process is emulsion free and yields a solid level of polymeric nanoparticles equal to or greater than 30 weight %.

The nanoscale materials, such as carbon black, fumed silica, titanium dioxide, and organo-clay have been produced and used for decades. In order to fully disperse these nanoscale materials in resin medium, high shear mechanical mixing or chemical exfoliation are typically applied during the dispersion process. US Patent 6,887,931 described thermosetting inorganic clay nano-dispersions comprising an inorganic clay treated in situ with an intercalation agent and an intercalation facilitating agent. CN 1454931 described a method to incorporate silicon dioxide into the unsaturated polyester resin. The silicon dioxide was added into the reactor at the beginning or during the polycondensation reaction of making the unsaturated polyester resin. The silicon dioxide can be in powder form, in colloid aqueous solution, in organic solution or gel.

It is the purpose of the invention to provide a low cost alternative way to disperse organic microparticles / nanoparticles into a resin medium, especially into a resin medium containing a solvent incompatible with the organic nanoparticle dispersion. The organic microparticles / nanoparticles can be prepared by emulsion polymerization, solution polymerization, or dispersion polymerization. The organic microparticles / nanoparticles have an average particle diameter of 10 to 1000 nanometers preferably from 20 to 500 nm. The organic microparticles / nanoparticles are incorporated into the non-aqueous resin medium during the synthesis of the resin medium. The organic microparticles /nanoparticles can be added at various stages in the synthesis of resin medium. Various resin systems can be used to make the organic microparticles / nanoparticles ; therefore, the properties of organic microparticles / nanoparticles can be designed to have the desired performance characters for the final applications of resin medium.

This invention is about a process to disperse organic microparticles / nanoparticles into a non-aqueous resin medium. The process includes the steps of a) preparing a 1^{st} resin dispersion/emulsion in water or solvent or mixture, wherein the said resin contains unsaturation in the polymer chain and optionally comprises at least one monomer ethylenically unsaturated ; b) curing the said resin dispersion by adding monomer and initiator or initiator ; c) adding the cured dispersion/emulsion during the synthesis steps of a 2^{nd} resin medium.

The resin system used to make the resin dispersion/emulsion can be unsaturated polyester, vinyl ester, polyurethane, unsaturated polyester/urethane hybrid, crosslinkable acrylics like multifunctional (meth)acrylic monomers and/or oligomers, melamine or the mixture of any of these resins. The dispersion/emulsion medium is usually water but may contain a small amount of a water-miscible organic solvent. In some cases, the water may be completely replaced by organic solvent where the organic solvent also may be used as the raw material in the synthesis of 2^{nd} (final) resin medium. The resin dispersion/emulsion may further contain one or more surfactants.

The said 1^{st} resin dispersion/emulsion is cured by adding monomer and initiator or initiator. The cured organic microparticles / nanoparticles are freely suspended in water and/or organic solvent. The organic microparticles / nanoparticles in water and/or organic solvent suspension can be added into the 2^{nd} resin non aqueous medium at various stages during the resin synthesis process. The water and/or organic solvent from organic microparticles / nanoparticles suspension is removed from the 2^{nd} resin non aqueous medium at the same time the reaction water is removed from the resin non aqueous medium. If the organic solvent is also used in the synthesis of resin medium, then it will not be removed and will be reacted with other ingredients to make the resin medium. The amount of organic nano-particle in the resin medium can be 2 to 30% preferably 2 to 20% by weight of the finished resin product in monomer.

The organic microparticles / nanoparticles are typically made by liquid phase method. The most commonly used liquid phase methods for making the organic microparticles / nanoparticles are either emulsion polymerization in aqueous medium or by dispersion polymerization in non-aqueous medium. The techniques of preparing these organic microparticles are well documented. These organic microparticles / nanoparticles are non-crosslinked or slightly crosslinked, and will swell in solvent. These organic microparticles / nanoparticles are used primary in coating applications. The organic microparticles / nanoparticles can be added into a coating formulation directly when the solvent of both systems are compatible.

The organic microparticles / nanoparticles can be made into powder form by various drying techniques. However, the organic microparticles / nanoparticles tend to agglomerate during the drying process, and the particle size of dry powder is usually bigger than the original particle size in solution. In order to obtain the organic microparticles / nanoparticles with the particle size less than 1000 nanometers, the microparticles / nanoparticles suspension must be very dilute prior to drying. As such, the energy cost will be very high. It is almost impossible to obtain the microparticles /nanoparticles in powder form with the same particle size in suspension.

The dispersion of dry inorganic microparticles / nanoparticles into a resin medium presents another challenge. In order to fully disperse microparticles / nanoparticles into a resin medium, high shear mechanical mixing or chemical exfoliation are typically applied during the dispersion process.

It is the purpose of the invention to provide a low cost alternative way to disperse organic microparticles / nanoparticles into non-aqueous resin medium, especially into resin medium containing incompatible solvent to the organic nanoparticle dispersion. The organic microparticles / nanoparticles can be prepared by emulsion polymerization, solution polymerization, or dispersion polymerization. The organic microparticles /nanoparticles have an average particle diameter of 10 to 1000 nanometers. The organic microparticles / nanoparticles are incorporated into the non-aqueous resin medium during the synthesis of the resin medium. The organic microparticles / nanoparticles can be added at various stages in the synthesis of resin medium. Various resin systems can be used to make the organic microparticles / nanoparticles ; therefore, the properties of organic microparticles / nanoparticles can be designed to have the desired performance characters for the final applications of resin medium.

This invention is about process to disperse organic microparticles / nanoparticles into non-aqueous resin medium. The process includes the steps of:
(a) Prepare the said 1^{st} resin dispersion/emulsion in water or solvent where the resin contains unsaturation in the polymer chain and optionally comprises a monomer.
(b) Cure the resin dispersion by adding monomer and initiator or initiator (alone) to form the said microparticles / nanoparticles.
(c) Add the cured dispersion/emulsion during the synthesis steps of the said 2^{nd} resin non aqueous medium.

The resin system used to make the resin dispersion/emulsion can be unsaturated polyester, vinyl ester, polyurethane containing unsaturation, unsaturated polyester/urethane hybrid, crosslinkable acrylics (crosslinkable acrylated monomers/oligomers), or the mixture of any of these resins. The resin dispersion/emulsion is usually water-base but it may contain a small amount of water miscible organic solvent. In some cases, the water may be completely replaced by organic solvent where the organic solvent may also acts as the raw material in the synthesis of resin medium. The resin dispersion/emulsion may further contain surfactant. The resin system may contain other additives, such inhibitors and stabilizers, traditionally used in these resin systems.

The unsaturated polyester resin has at least one dicarboxylic alkene moiety and is preferably an oligomer of an a,β-ethylenically unsaturated dicarboxylic acid compound obtained by the condensation reaction of one or more of a saturated di- or polycarboxylic acid or anhydride and an unsaturated di- or polycarboxylic acid or anhydride with a glycol or a polyhydric alcohol. The unsaturated polyester resin can also be prepared from unsaturated di- or polycarboxylic acid(s) or anhydride(s) with glycols and/or polyhydric alcohol(s). Examples of suitable saturated di- or polycarboxylic acids include isophthalic, orthophthalic, terephthalic, adipic, succinic, sebacic acid, trimellitic anhydride, and mixtures of two or more of these compounds with isophthalic acid being preferred. Typical unsaturated carboxylic acids or anhydrides include maleic acid, fumaric acid, citraconic acid, chloromaleic acid, allyl succinic acid, itaconic acid, mesaconic acid, their anhydrides and mixtures of two or more such compounds, with maleic anhydride being the preferred choice. Examples of polyhydric alcohols which are useful in the invention include neopentyl glycol, ethylene glycol, diethylene glycol, triethylene glycol, propylene glycol, dipropylene glycol, 1,4-butanediol, polyethylene glycols, glycerol, mannitol, 1,2-propanediol, pentaerythritol, 1,6-hexanediol, 1,3-butylene glycol and mixtures of two or more of such compounds. The production of such resins is well-known to those skilled in the art and, additionally, many suitable resins are commercially available from resin manufacturers, such as Cook Composites & Polymers Company.

The vinyl ester resins are generally prepared by reaction of an epoxy resin with an unsaturated monobasic acid. Any of the known polyepoxides can be used in the preparation of the vinyl ester resins. The unsaturated monobasic acids suitable for reaction with the polyepoxides include acrylic acid, methacrylic acid, crotonic acid, cinnamic acid and the like. The vinyl ester resins can be further modified, for example by maleic anhydride to introduce carboxy groups, to increase the ability to make dispersion/emulsion in water. The production of vinyl ester resins is well-known to those skilled in the art and many suitable resins are commercially available from resin manufactures, such as Cook Composites & Polymers Company.

The polyurethane resin systems useful for making the cured microparticles /nanoparticles are those containing unsaturation in the polymer chain. Examples of the polyurethane resin systems include urethane or polyurethane acrylates, which are the reaction products of polyols, diisocyanates, and hydroxyalkyl (meth)acrylates. The unsaturated polyester/urethane hybrid resin systems are similar to the polyurethane resin systems, but the unsaturated polyester/urethane hybrid resin systems contain unsaturated polyester polyols in the polymer chain.

The crosslinkable acrylics are based on polymerizable acrylic monomers/oligomers mixtures containing crosslinkable molecules having a plurality of polymerizable groups in the molecule like the multifunctional (met)acrylic monomers and/or oligomers. Particularly suitable crosslinkable acrylics for the present invention include polyester acrylates, such as polycaprolactone diol or triol acrylates, urethane acrylates, epoxy acrylates, polyether acrylates, acrylic resin acrylates and mixtures of them. The techniques of making crosslinkable acrylics are well known in the coating industry.

The resin dispersion/emulsion should exhibit stability for certain period of time since the resin dispersion/emulsion can be made and stored without going through steps (b) and (c) of this invention immediately. When liquid resin systems are used to make cured microparticles / nanoparticles, the dispersion/emulsion in water, solvent, or combination of both can be prepared on-site right before step (b) since they can be easily dispersed or emulsified.

The ethylenically unsaturated monomer useful for making the cured microparticles / nanoparticles can be an aromatic (vinyl) compound, acrylates or methacrylates. The ethylenically unsaturated monomer can be any ethylenically unsaturated monomer capable of crosslinking the unsaturated polyester resin via vinyl addition polymerization. Examples of useful ethylenically unsaturated monomers are styrene, o-, m-, p-methyl styrene, methyl acrylate, methyl methacrylate, (meth)acrylic acid, hydroxyl acrylate, t-butylstyrene, divinyl benzene, diallyl phthalate, triallyl cyanurate and mixtures of two or more unsaturated monomers. The preferred monomer is styrene because it provides an economical monomer solution.

Monomer or mixture of monomers can be added and mixed into the resin dispersion/emulsion when the resin dispersion/emulsion is used to make cured organic microparticles / nanoparticles in step (b). The cured organic microparticles / nanoparticles are made through the typical curing processes of thermosetting resins. The typical curing process of thermosetting resin comprises adding initiators and promoters to a resin or resin solution and (i) curing at ambient temperature around 25°C, or (ii) heating the material to an elevated temperature to cure the resin. A typical curing condition can be at ambient temperature or up to 95°C when in water or at least 5°C below the boiling temperature of the resin dispersion/emulsion when resin dispersion is non-aqueous. The cured organic microparticles / nanoparticles in dispersion can be post-cured at an elevated temperature as described above for a period of time to further increase the degree of cure. The cured organic microparticles / nanoparticles should have a degree of cure (conversion) above 70%, preferably above 80%. The cured nanoparticle dispersion should contain less than 0.5 weight %, preferable less than 0.3 weight % free monomer measured by GC (gas chromatography).

The initiators useful in producing the cured resin compositions of this invention are vinyl polymerization catalysts such as organic peroxides, persulfides, persulfates, perborates, percarbonates, and azo compounds or any other suitable catalyst capable of catalyzing the vinyl polymerization of the polyester polyol and/or the ethylenically unsaturated monomer. The initiators can be either water soluble or oil soluble. Illustrative of a few such catalysts are benzoyl peroxide (BPO), tertiarybutyl peroxybenzoate (TBPB), 2,2'-azo-bis-isobutyronitrile (AIBN), dibenzoyl peroxide, lauryl peroxide, di-t-butyl peroxide, diisopropyl peroxide carbonate, t-butyl peroxy-2-ethylhexanoate, potassium persulfate, and ammonium persulfate. Promoters can also be used in combination with vinyl polymerization peroxide catalysts to control the rate of free radical initiation. A common benzoyl peroxide promoter is N,N-diethylaniline.

A constant mixing should be applied to the resin/monomer dispersion/emulsion during the curing process. The mixing is necessary to control the temperature below the boiling point of resin/monomer dispersion/emulsion since the cross-linking reaction is exothermic. The mixing is also important to keep the cured microparticles / nanoparticles separate from each other during the reaction. Insufficient mixing will result in agglomeration or gelation of the nanoparticle dispersion. The cured organic microparticles / nanoparticles should have an average diameter from 10 to 1000 nanometers preferably from 20 to 500, and the viscosity of the cured organic nanoparticle in water, solvent, or combination of both is less than 5000 mPa.s (cps). The cured organic nanoparticle suspension is suspended in water, solvent, or combination of both freely, and is stable without separation during the storage.

The non-aqueous (2^{nd} and final) resin medium in this invention is a thermosetting resin system. The thermosetting resin system includes unsaturated polyester resin, crosslinkable acrylics, (poly)urethane acrylics, unsaturated polyester/polyurethane hybrid resin. The non-aqueous (2^{nd} and final) resin medium can also be a polyol for the polyurethane resin. The non-aqueous resin medium in this invention is typically made by batch process, and may require multiples steps through out the synthesis process.

In the synthesis of unsaturated polyester resin, the organic nanoparticle water suspension is added into the reactor with other ingredients at the beginning of reaction. The temperature of reactor is gradually raised to the boiling point of the resin mixture. The water/co-solvent from resin dispersion/emulsion is removed from the resin medium when water/co-solvent boils and is removed from the 2^{nd} resin non aqueous medium. If the organic nanoparticle is suspended in an organic solvent where the said organic solvent also acts as the raw material in the synthesis of unsaturated polyester resin, the temperature may be raised directly to the esterification temperature. The synthesis proceeds at the normal conditions as for making the unsaturated polyester resin.

If the unsaturated polyester resin is made by multiple stages, the organic nanoparticle suspension may be added into the reactor at the later stage. However, the reactor temperature needs to be lower than the boiling temperature of the organic nanoparticle suspension. The water/co-solvent can be removed by distillation or through vacuum stripping. If the organic nanoparticle is suspended in organic solvent where the organic solvent also acts as the raw material in the synthesis of unsaturated polyester resin, the temperature may be raised directly to the esterification temperature and finish the resin synthesis normally. Similar steps can be followed in the synthesis of polyols for the polyurethane resin.

In the synthesis of crosslinkable acrylic resin or urethane acrylic resin, the organic nanoparticle suspension is added into the 2^{nd} resin non aqueous medium and all the water/co-solvent removed before the epoxy or the diisocyanate can be added. If the organic nanoparticle is suspended in an organic solvent where the said organic solvent also acts as the raw material for 2^{nd} resin, the reaction may proceed as the normal synthesis steps for crosslinkable acrylic resin or urethane acrylic resin.

The thermosetting resin system (2^{nd} final resin) may be mixed or blended with one or more compatible unsaturated monomers, examples of suitable monomers are aromatic vinyl compounds such as styrene, alpha-methylstyrene, dichlorostyrene, vinyl naphthalene, vinyl phenol, vinyl toluene, divinyl benzene and the like, unsaturated esters, such as acrylic and methacrylic esters, vinyl laurate, and the like, unsaturated acids, such as acrylic and alpha-alkylacrylic acids, butenoic acid, allylbenzoic acid, vinylbenzoic acid, and the like, halides, such as vinyl chloride, vinylidene chloride, nitriles, such as acrylonitrile, methacrylonitrile, diolefins, such as butadiene, isoprene, methylpentadiene, esters of polycarboxylic acids, such as diallyl phthalate, divinyl succinate, diallyl mateate, divinyl adipate, dichloroallyl tetrahydrophthalate, and the like, and mixtures thereof.

The said thermosetting resin system may further contain additives, such inhibitors and stabilizers, generally known in the composites industry.

The amount of organic nanoparticle in non-aqueous resin medium can be 2 to 30% by weight and preferably from 2 to 20%. The lower limit of organic nanoparticle in the resin medium is related to the observation of impact of organic nanoparticle to cured resin properties, such as mechanical properties. The upper limit of organic nanoparticle in the said 2^{nd} resin medium is generally determined by the viscosity of the said resin medium. The resin medium viscosity should be less than 5000 mPa.s (cps) when the maximum allowable amount of monomer is added. The % of monomer in the final resin is in the range from 20 to 50% with respect to the total weight of the resin, including monomer and microparticles / nanoparticles.

The said microparticles / nanoparticles may contain/bear reactive groups with the said thermosetting resin medium, during the synthesis of the said resin in the presence of the said microparticles / nanoparticles. Such groups, without limitation may be hydroxy, carboxy, amine, epoxy.

The said thermosetting resin system containing microparticles / nanoparticles is useful for various applications. The nanoparticle may replace or partially replace the fillers in composite materials. The use of microparticles / nanoparticles in thermosetting materials may increase the mechanical strength, lower the porosity, and increase the clearity for cured resin.

According to a preferred process of the present invention, the said first resin is selected from an unsaturated polyester, vinyl ester, polyurethane, unsaturated polyester/urethane hybrid, crosslinkable acrylics and the said 2^{nd} resin system from an unsaturated polyester resin, crosslinkable acrylics, (poly)urethane acrylics, unsaturated polyester/polyurethane hybrid resin, vinyl esters, and polyols for the polyurethane resin.

The non-aqueous resin medium obtained using the claimed process can be used in a composite or coating curable composition.

Finally, an article comprising or obtained from the non-aqueous resin medium as obtained according to the invention can be prepared. More particularly, said article is obtained by curing a composite or coating (like gel coats) composition as defined above. This article may preferably be a composite article, more particularly a molded composite article or a gel coat.

Unless otherwise specified herein, the term "viscosity" refers to the viscosity of a polymer in styrene monomer at 70 wt.% NVM (non-volatile material, see below) at 25°C measured using a Brookfield Viscometer.

The term "NVM" refers to non-volatile material dispersed in a volatile substance (e.g., styrene monomer) measured according to ASTM D1259.

The following examples show the steps of preparation resin containing cured organic nanoparticle.

### Example 1 - Synthesis of organic nanoparticle

Into a glass container, 100 grams of a commercial unsaturated polyester dispersion (STYPOL 0405022), comprising 32% UPR in water and co-solvent, was mixed with 200 grams of deionized water, 14.6 grams of styrene monomer, and 6.7 grams of surfactant ABEX EP-120 (Rhodia). The mixture was mixed with a magnetic stirrer for 10 minutes. The mixture was heated to 70°C on a hot plat while continued the mixing with the magnetic stirrer. 0.11 grams of ammonium persulfate was dissolved in 3.0 grams of deionized water. The ammonium persulfate solution was added into the resin dispersion mixture in 4 shots at 10 minutes interval. The resin dispersion was hold at 70°C for another 60 minutes while continued the mixing with the magnetic stirrer. The resulting resin dispersion was a yellow transparent liquid. The residual styrene content of resin dispersion was 0.05%. The resin dispersion formed a transparent film when the water was removed from the resin dispersion. The film showed a residual exotherm of 12.8 J/g and a glass transition temperature of 62°C by DSC (temperature scan from -50 to 250°C at 10°C/min).

### Example 2 - Synthesis of organic nanoparticle

Into a glass container, 50 grams of an unsaturated polyester dispersion (a NPG/DPG/IPA/MA/TMA type, 32% NVM) was mixed with 100 grams of deionized water, and 10.6 grams of styrene monomer. The mixture was mixed with a magnetic stirrer for 10 minutes. The mixture was heated to 80°C on a hot plat while continued the mixing with the magnetic stirrer. 0.07 grams of ammonium persulfate was dissolved in 3.5 grams of deionized water. The ammonium persulfate solution was added into the resin dispersion mixture in 4 shots at 10 minutes interval. The resin dispersion was hold at 80°C for another 60 minutes while continued the mixing with the magnetic stirrer. The resulting resin dispersion was a yellow transparent liquid with acid value of 6 and viscosity of 1000 mPa.s. The mean particle size of resin dispersion was 80 nm. The residual styrene content of resin dispersion was 0.1%. The resin dispersion formed a transparent film when the water was removed from the resin dispersion. The remaining solid showed a residual exotherm of 20.3 J/g and a glass transition temperature of 151°C by DSC.

### Comparative Example 3 - Synthesis of resin without organic nanoparticle

In a two-liter flask equipped with a stirrer, thermometer, a water separating column fitted with a reflux condenser, and a nitrogen inlet, the following ingredients are added : Components Grams : Neopentyl Glycol 463, 2-Butyl-2-Ethyl-1, 3-Propanediol 351, Isophthalic Acid 270, Benzoic Acid 38, Maleic Anhydride 423. The charged mixture is following a two-stage process and a total of 190 parts of water are distilled off. The reaction mixture is held at 220°C until an acid number of 10-20 is obtained. The reaction mixture is then cooled to less than 140°C and the following ingredients are added : Components Grams Toluhydroquinone 0.2 and Styrene 590.

### Example 4 - Synthesis of resin containing organic microparticles / nanoparticles

In a two-liter flask equipped with a stirrer, thermometer, a water separating column fitted with a reflux condenser, and a nitrogen inlet, the following ingredients are added : Components Grams : Neopentyl Glycol 463, 2-Butyl-2-Ethyl-1,3-Propanediol 351, Isophthalic Acid 270, Nano-particle Dispersion from Example 2 : 556, Benzoic Acid 38, Maleic Anhydride 423. The charged mixture is following a two-stage process and a total of 596 parts of water are distilled off. The reaction mixture is held at 220°C until an acid number of 10-20 is obtained. The reaction mixture is then cooled to less than 140°C and the following ingredients are added : Components Grams Toluhydroquinone 0.2, Styrene 542.

### Comparative Example 5 - Synthesis of polyester acrylic resin

Into a two-liter flask equipped with stirrer, thermometer, nitrogen introducing tube and condenser were placed 427 grams of polycaprolactone triol (Tone™ polyol 0301, Dow Chemical) and 680 grams of hexahydrophthalic anhydride. The temperature was raised to 115°C and kept at that temperature for 3 hours to make a polyacid. Then, 650 grams of glycidyl methacrylate, 0.2 grams of 2,3,5-trimethylhydroquinone and 0.8 grams of benzyltriethylammonium chloride were added. The reactor's atmosphere was changed from nitrogen to nitrogen with 5% oxygen, and the temperature raised to 115°C and held at that temperature until the acid number was below 20. Then, 732 grams of styrene monomer and 0.2 grams of toluhydroquinone were added. The resulting polyester acrylic resin had a viscosity of 350 mPa.s (cP) at 70% wt solid content in styrene.

### Example 6 - Synthesis of polyester acrylic resin containing organic microparticles / nanoparticles

Into a two-liter flask equipped with stirrer, thermometer, nitrogen introducing tube and condenser were placed 900 grams of polyacid from comparative example 5, 406 grams of toluene, 406 grams of isopropyl alcohol, and 110 grams of a commercial unsaturated polyester resin (STYPOL 0400902, a NPG/BEPD/IPA/MA/BA type, 30% styrene monomer) were added into the flask to make a resin dispersion. The mixture was mixed well and the temperature was raised to 70°C, then 1.45 grams of 2,2'-Azobis(2-Methylbutyronitrile) (VAZO 67, DuPont) was added and hold at 70°C for 5 hours. The reactor temperature was raised slowly to 145°C to remove the solvent. A 25 inch vacuum was applied for 30 minutes at the end. The reactor temperature was then decreased to 115°C, and 530 grams of glycidyl methacrylate, 0.16 grams of toluhydroquinone and 0.8 grams of Acryloxyethyl Trimethyl Ammonium Chloride were added. The reactor's atmosphere was changed from nitrogen to nitrogen with 5% oxygen and the temperature raised to 115°C and held at that temperature until the acid number was below 20. Then, 635 grams of styrene monomer and 0.2 grams of 2,3,5-trimethylhydroquinone were added. The resulting polyester acrylic resin had a viscosity of 1620 mPa.s (cP) at 70% wt solid content in styrene.

### Characters of resin system containing microparticles / nanoparticles

The resin samples were made into castings and the tensile properties, flexural properties, and HDT of the castings were measured following the ASTM Standards D-638, D-790, and D-648. Both tensile and flexural properties were measured at the ambient temperature at 25°C. The plane-strain fracture toughness and critical strain energy release rate of samples 3 and 4 were measured according to ASTM D-5045. Sample containing organic microparticles / nanoparticles showed improvement in both properties as shown in Table 1.

**Table 1 - Viscosity and Physical Properties of Resin Samples**

| **Resin Example** | **3** | **4** | **5** | **6** |
|---|---|---|---|---|
| NVM (%) | 70 | 70 | 70 | 70 |
| Viscosity mPa.s (cps) | 1500 | 1800 | 350 | 1620 |
| Tensile Strength Mpa (psi) | 66.46 (9640) | 66.33 (9620) | 79.29 (11500) | 71.57 (10380) |
| Tensile Modulus (kpsi) | 2.79 (405) | 3.33 (483) | 32.2 (467) | 34.54 (501) |
| Elongation (%) | 3.37 | 2.65 | 5.48 | 5.27 |
| Flexural Strength (psi) | 107.76 (15630) | 124.98 (18127) | 132.38 (19200) | 127.55 (18500) |
| Plane-strain Fracture Toughness (MPa m^{1/2}) | 0.328 | 0.552 | - | - |
| Critical Strain Energy Release Rate (kJ/m²) | 0.122 | 0.246 | - | - |
| HDT (°C) | 86 | 83 | 74 | 65 |

## Claims

1. A process to disperse organic microparticles / nanoparticles into non-aqueous resin medium comprising the steps of:
(a) preparing a dispersion or emulsion of a first unsaturated resin in water, solvent, or combination of both, wherein the first resin contains unsaturation in the polymer chain and optionally comprises a monomer.
(b) curing the resin in the dispersion or emulsion by adding monomer and initiator or initiator to form organic microparticles / nanoparticles.
(c) adding the cured dispersion/emulsion during synthesis steps of a second resin medium.

2. The process according to claim 1 wherein the first resin is an unsaturated polyester, vinyl ester, polyurethane containing unsaturation, unsaturated polyester/urethane hybrid, crosslinkable acrylics, or the mixture of any of these resins.

3. The process according to claims 1 or 2, wherein the monomer is selected from the group consisting of aromatic (vinyl) compounds, acrylates and methacrylates.

4. The process according to any one of claims 1 to 3, wherein the initiators are vinyl polymerization initiators selected from organic peroxides, persulfides, persulfates, perborates, percarbonates, and azo compounds or any other suitable catalyst capable of initiating the vinyl polymerization.

5. The process according to any one of claims 1 to 4, wherein the curing at the ambient temperature or up to 95°C when in water is conducted or up to a curing temperature at least 5°C below the boiling temperature of the resin dispersion/emulsion.

6. The process according to any one of claims 1 to 5, wherein the cured organic nanoparticles are suspended in water, solvent, or combination of both freely.

7. The process according to claim 6, wherein the cured organic nanoparticle dispersion contains less than 0.5 weight %, preferable less than 0.3 weight % free monomer.

8. The process according to any one of claims 1 to 7, wherein the organic nanoparticles have an average particle size range of 10 nm to 1000 nm.

9. The process according to any one of claims 1 to 8, wherein the organic microparticles / nanoparticles have a degree of cure above about 70%.

10. The process according to claim 9, wherein the organic microparticles /nanoparticles have a degree of cure above about 80%.

11. The process according to any one of claims 1 to 10, wherein the organic nanoparticles suspension is added into the second resin non-aqueous medium at various stages during the resin synthesis process and the water/co-solvent from resin dispersion/emulsion, is removed from the 2^{nd} resin medium at the same time the reaction water is removed from the second resin medium or by raising the temperature of the 2^{nd} resin medium above the boiling temperature of water/co-solvent.

12. The process according to any one of claims 1 to 11, wherein the co-solvent further contains a reactive functional group and is a reactant in the synthesis of the said 2^{nd} resin medium.

13. The process according to any one of claims 1 to 11, wherein the amount of organic nanoparticle in the said non-aqueous second resin medium is from 2 to 30% by weight.

14. The process according to any one of claims 1 to 12, wherein the said non-aqueous second resin medium is a thermosetting resin.

15. The process according to any one of claims 1 to 13, wherein the said non-aqueous second resin medium, further comprises a monomer.

16. The process according to any one of claims 1 to 13, wherein the resin dispersion further comprises at least one surfactant or co-solvent.

17. The process according to any one of claims 1 to 16, wherein the said first resin is selected from an unsaturated polyester, vinyl ester, polyurethane containing unsaturation, unsaturated polyester/urethane hybrid, crosslinkable acrylics and the said 2^{nd} resin system from an unsaturated polyester resin, crosslinkable acrylics, (poly)urethane acrylics, unsaturated polyester/polyurethane hybrid resin, vinyl esters, and polyols for the polyurethane resin.

## Patentansprüche

1. Prozess zum Dispergieren von organischen Mikroteilchen/Nanoteilchen in nicht wässriges Harzmedium, umfassend die folgenden Schritte:
(a) Herstellen einer Dispersion oder Emulsion eines ersten ungesättigten Harzes in Wasser, Lösungsmittel oder einer Kombination von beidem, wobei das erste Harz Ungesättigtheit in der Polymerkette enthält und optional ein Monomer umfasst.
(b) Härten des Harzes in der Dispersion oder Emulsion durch Zugeben von Monomer und Initiator oder Initiator, um organische Mikroteilchen/Makroteilchen zu bilden.
(c) Zugeben der ausgehärteten Dispersion/Emulsion während Syntheseschritten eines zweiten Harzmediums.

2. Prozess nach Anspruch 1, wobei es sich bei dem ersten Harz um ein ungesättigtes Polyester, Vinylester, Polyurethan mit Ungesättigtheit, ein ungesättigtes Polyester/Urethan-Hybrid, vernetzbare Acrylharzderivate oder die Mischung von beliebigen dieser Harze handelt.

3. Prozess nach Anspruch 1 oder 2, wobei das Monomer aus der Gruppe bestehend aus aromatischen (Vinyl) Verbindungen, Acrylaten und Methacrylaten ausgewählt ist.

4. Prozess nach einem der Ansprüche 1 bis 3, wobei die Initiatoren Vinylpolymerisationsinitiatoren sind, die aus organischen Peroxiden, Persulfiden, Persulfaten, Perboraten, Percarbonaten und Azoverbindungen oder einem beliebigen anderen geeigneten Katalysator ausgewählt sind, der zum Initiieren der Vinylpolymerisation in der Lage sind.

5. Prozess nach einem der Ansprüche 1 bis 4, wobei das Härten bei der Umgebungstemperatur oder bis zu 95 °C, wenn in Wasser, durchgeführt wird oder bis zu einer Härtungstemperatur von mindestens 5 °C unter der Siedetemperatur der Harzdispersion/-emulsion.

6. Prozess nach einem der Ansprüche 1 bis 5, wobei die gehärteten organischen Nanoteilchen in Wasser, Lösungsmittel oder einer Kombination von beidem frei suspendiert werden.

7. Prozess nach Anspruch 6, wobei die Suspension gehärteter organischer Nanoteilchen weniger als 0,5 Gewichts-%, vorzugsweise weniger als 0,3 Gewichts-% freies Monomer enthält.

8. Prozess nach einem der Ansprüche 1 bis 7, wobei die organischen Nanoteilchen einen mittleren Teilchengrößenbereich von 10 nm bis 1000 nm aufweisen.

9. Prozess nach einem der Ansprüche 1 bis 8, wobei die organischen Mikroteilchen/Nanoteilchen einen Härtungsgrad von etwa 70 % aufweisen.

10. Prozess nach Anspruch 9, wobei die organischen Mikroteilchen/Nanoteilchen einen Härtungsgrad von etwa 80 % aufweisen.

11. Prozess nach einem der Ansprüche 1 bis 10, wobei die Suspension organischer Nanoteilchen auf verschiedenen Stufen während des Harzsyntheseprozesses in das zweite nicht wässrige Harzmedium zugegeben wird, und das Wasser/Hilfslösungsmittel aus der Harzdispersion/-emulsion aus dem 2. Harzmedium zur gleichen Zeit, zu der das Reaktionswasser aus dem zweiten Harzmedium entfernt wird, oder durch Erhöhen der Temperatur des 2. Harzmediums auf über die Siedetemperatur von Wasser/Hilfslösungsmittel entfernt wird.

12. Prozess nach einem der Ansprüche 1 bis 11, wobei das Hilfslösungsmittel ferner eine reaktive funktionelle Gruppe enthält und ein Reaktant in der Synthese des 2. Harzmediums ist.

13. Prozess nach einem der Ansprüche 1 bis 11, wobei die Menge organischer Nanoteilchen im nicht wässrigen zweiten Harzmedium 2 bis 30 Gewichts-% beträgt.

14. Prozess nach einem der Ansprüche 1 bis 12, wobei das nicht wässrige zweite Harzmedium ein wärmehärtbares Harz ist.

15. Prozess nach einem der Ansprüche 1 bis 13, wobei das nicht wässrige zweite Harzmedium ferner ein Monomer umfasst.

16. Prozess nach einem der Ansprüche 1 bis 13, wobei die Harzdispersion ferner mindestens ein Tensid oder Hilfslösungsmittel umfasst.

17. Prozess nach einem der Ansprüche 1 bis 16, wobei das erste Harz aus einem ungesättigten Polyester, Vinylester, Polyurethan mit Ungesättigtheit, einem ungesättigten Polyester/Urethan-Hybrid, vernetzbaren Acrylharzderivaten ausgewählt ist, und das 2. Harzsystem aus einem ungesättigten Polyesterharz, vernetzbaren Acrylharzderivaten, (Poly)urethan-Acrylharzderivaten, einem ungesättigten Polyester/Polyurethan-Hybridharz, Vinylestern, und Polyolen für das Polyurethanharz ausgewählt ist.

## Revendications

1. Procédé pour disperser des microparticules/nanoparticules organiques dans un milieu de résine non aqueux comprenant les étapes consistant à :
(a) préparer une dispersion ou une émulsion d'une première résine insaturée dans de l'eau, un solvant ou une combinaison des deux, la première résine contenant une insaturation dans la chaîne polymère et comprenant facultativement un monomère ;
(b) durcir la résine dans la dispersion ou l'émulsion en ajoutant un monomère et un initiateur ou un initiateur pour former des microparticules/ nanoparticules organiques ;
(c) ajouter la dispersion/émulsion durcie pendant les étapes de synthèse d'un milieu d'une seconde résine.

2. Procédé selon la revendication 1, dans lequel la première résine est un polyester insaturé, un ester de vinyle, un polyuréthane contenant une insaturation, un hybride insaturé de polyester/uréthane, des composés acryliques réticulables, ou le mélange de n'importe lesquelles de ces résines.

3. Procédé selon la revendication 1 ou 2, dans lequel le monomère est choisi dans le groupe comprenant les composés (vinyliques) aromatiques, les acrylates et les méthacrylates.

4. Procédé selon l'une quelconque des revendications 1 à 3, dans lequel les initiateurs sont des initiateurs de polymérisation vinylique choisis parmi les peroxydes organiques, les persulfures, les persulfates, les perborates, les percarbonates et les composés azo ou n'importe quel autre catalyseur approprié capable d'initier la polymérisation vinylique.

5. Procédé selon l'une quelconque des revendications 1 à 4, dans lequel le durcissement est réalisé à température ambiante ou allant jusqu'à 95 °C lorsque de l'eau est utilisée ou allant jusqu'à une température de durcissement d'au moins 5 °C au-dessous de la température d'ébullition de la dispersion/émulsion de résine.

6. Procédé selon l'une quelconque des revendications 1 à 5, dans lequel les nanoparticules organiques durcies sont suspendues dans de l'eau, un solvant ou une combinaison libre des deux.

7. Procédé selon la revendication 6, dans lequel la dispersion de nanoparticules organiques durcies comprend moins de 0,5 % en poids, de préférence moins de 0,3 % en poids de monomère libre.

8. Procédé selon l'une quelconque des revendications 1 à 7, dans lequel les nanoparticules organiques ont une taille de particule moyenne de l'ordre de 10 nm à 1000 nm.

9. Procédé selon l'une quelconque des revendications 1 à 8, dans lequel les microparticules/ nanoparticules organiques ont un degré de durcissement supérieur à environ 70 %.

10. Procédé selon la revendication 9, dans lequel les microparticules/nanoparticules organiques ont un degré de durcissement supérieur à environ 80 %.

11. Procédé selon l'une quelconque des revendications 1 à 10, dans lequel la suspension de nanoparticules organiques est ajoutée dans le milieu non aqueux de la seconde résine à divers stades pendant le procédé de synthèse de la résine et le mélange eau/co-solvant de la dispersion/émulsion de résine, est retiré du milieu de la seconde résine en même temps que l'eau de la réaction est retirée du milieu de la seconde résine ou en augmentant la température du milieu de la seconde résine au-dessus de la température d'ébullition du mélange eau/co-solvant.

12. Procédé selon l'une quelconque des revendications 1 à 11, dans lequel le co-solvant comprend en outre un groupe fonctionnel réactif et est un réactif dans la synthèse dudit milieu de la seconde résine.

13. Procédé selon l'une quelconque des revendications 1 à 11, dans lequel la quantité de nanoparticules organiques dans ledit milieu non aqueux de la seconde résine est de 2 à 30 % en poids.

14. Procédé selon l'une quelconque des revendications 1 à 12, dans lequel ledit milieu non aqueux de la seconde résine est une résine thermodurcissable.

15. Procédé selon l'une quelconque des revendications 1 à 13, dans lequel ledit milieu non aqueux de la seconde résine comprend en outre un monomère.

16. Procédé selon l'une quelconque des revendications 1 à 13, dans lequel la dispersion de résine comprend en outre au moins un tensioactif ou un co-solvant.

17. Procédé selon l'une quelconque des revendications 1 à 16, dans lequel ladite première résine est choisie parmi un polyester insaturé, un ester de vinyle, un polyuréthane contenant une insaturation, un hybride insaturé de polyester/uréthane, des composés acryliques réticulables et ledit second système de résine est choisi parmi une résine insaturée de polyester, des composés acryliques réticulables, des composés acryliques de (poly)uréthane, une résine hybride insaturée de polyester/polyuréthane, des esters de vinyle et des polyols pour la résine de polyuréthane.
